Europäisches Patentamt

(19) European Patent Office

Office européen des brevets

(11) Publication number: **0 055 174**
**B1**

(12) **EUROPEAN PATENT SPECIFICATION**

(45) Date of publication of patent specification: **13.08.86**

(21) Application number: **81402008.7**

(22) Date of filing: **16.12.81**

(51) Int. Cl.⁴: **B 41 J 5/12**

(54) **A plastic molding and a method of its manufacture.**

(30) Priority: **24.12.80 JP 183491/80**

(43) Date of publication of application:
**30.06.82 Bulletin 82/26**

(45) Publication of the grant of the patent:
**13.08.86 Bulletin 86/33**

(84) Designated Contracting States:
**DE FR GB**

(56) References cited:
**DE-C- 905 139**
**DE-C-1 110 660**

(73) Proprietor: **FUJITSU LIMITED**
**1015, Kamikodanaka Nakahara-ku**
**Kawasaki-shi Kanagawa 211 (JP)**

(72) Inventor: **Masahiko; Shiho**
**1995-3, Asahigaoka**
**Suzaka-shi Nagano 382 (JP)**
Inventor: **Yasunori, Sato**
**3305-87, Oaza Takai Takayama-mura**
**Kamitakai-gun Nagano 382 (JP)**

(74) Representative: **Descourtieux, Philippe et al**
**CABINET BEAU de LOMENIE 55 rue**
**d'Amsterdam**
**F-75008 Paris (FR)**

Courier Press, Leamington Spa, England.

## Description

The present invention is directed to a method for manufacturing a plastic molding, more particularly a plastic molding made of two different plastic materials having different colors.

Background of the Invention

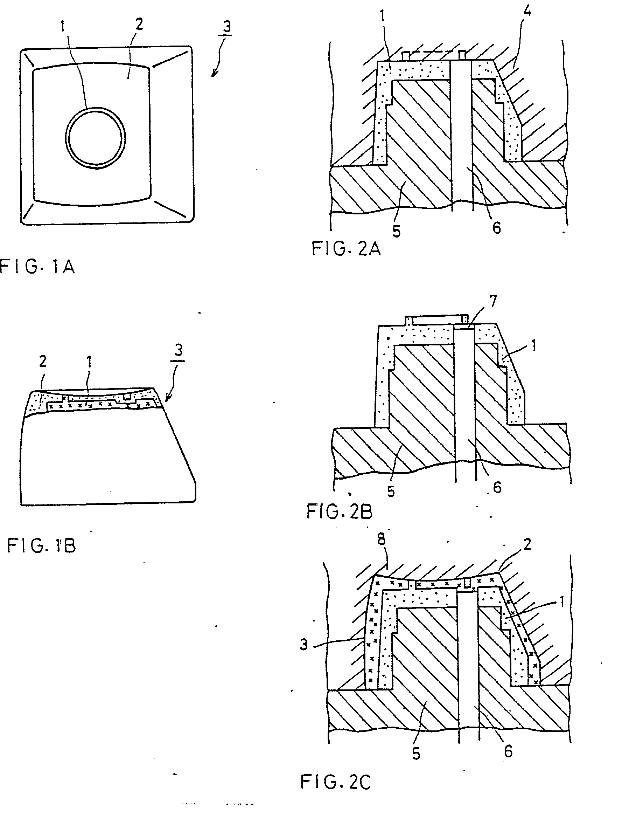

Plastic moldings having two colors are widely used to provide, for example, key tops of an input means such as a keyboard or typewriter, the colored part forming letters and signs which serve the purpose of visually selecting or inspecting an input or an output information. Fig. 1A is a plan view of a key top 3 bearing a sign 0 and Fig. 18 is a side view, partially sectioned, of the key top of Fig. 1A. The key top 3 includes a first part 1 (to be called the first part molding hereinafter) which forms the sign 0 and is made of a plastic material having a certain color, for example gray (N8 of Munsell color system) and a second part 2 (to be called the second part molding hereinafter) which forms the portion encircled by the sign 0 and also the portion outside thereof and is made of a plastic material having a color other than gray, for example dark gray (583/0.5 of Munsell color system).

When the sign which is borne by the key top defines an enclosed area, as it is the case with the sign 0, a problem to be solved is to allow the second plastic material to fill the enclosed area and the area around the sign, while leaving the upper face of the sign apparent.

Different solutions have been proposed.

The document DE—C—905 139 teaches to provide a first molded body having an upper wall portion with a projection formed thereon having the form of the sign to be borne by the key top and defining an enclosed area. A plurality of passages are formed through the upper wall and open in the enclosed area. A second molded body is formed which buries the first one except for the end face of the projection, the plastic material of the second body being allowed to reach the enclosed area by passing through the passages formed in the first molded body.

DE—C—1 110 660 also discloses the making of a key top in two parts. A first part has an upper wall with its upper face showing a recess in the form of the sign, and with holes being formed in a matrix fashion from the lower face of the upper wall. The holes are formed only on a part of the thickness of the wall so that only the holes placed in registration with the recess are through holes and open in the recess. Thus, plastic material is allowed to fill the recess by passing through the holes from the lower face of the upper wall.

The above mentioned documents remain however silent regarding the particular means used for molding the first and second parts constituting the key tops.

A known method for automatically producing a key top like the one of Figs 1A and 1B by means of an injection molding machine will be now briefly described with respect to Figs 2A, 2B and 2C.

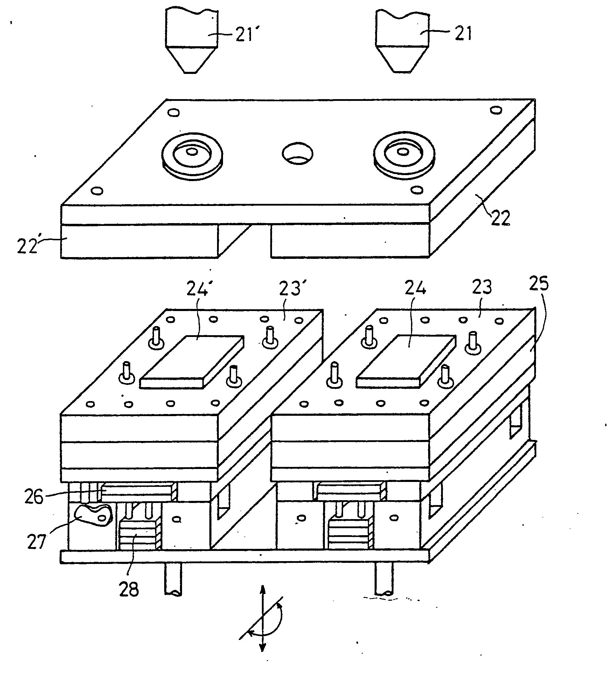

A die 4, which will be hereinafter referred to as an outer die and a die 5, which will be hereinafter referred to as an inner die 5 are positioned facing each other at predetermined locations to form a cavity into which soft gray plastic material is injected to form the first part molding 1. Then, as shown in Fig. 2B, the outer die 4 is removed, while a pin 6 movable through the inner die 5 is slightly lowered such that a tunnel shaped path 7 is formed underneath the projection part of the first part molding 1 constituting the sign 0. Thereafter, an outer die 8 for the second part molding is positioned at a predetermined location in facing relationship with the inner die 5 so as to cover the first part molding 1, as illustrated in Fig. 2C. At this time, soft dark gray plastic material is injected into the cavity formed by the outer die and the first part molding to form the second part molding 2. The key top 3 is thus completed. The forming of the first and second part moldings is carried out by an injection molding machine, such as the one shown in Fig. 3. In this figure, 21 denotes a first cylinder, 22 a first cavity plate, 23 a first strip plate, 24 a first core, 26 a slide core plate, 27 a cam, and 28 an eject plate. References 21' to 24' denote second parts identical to the ones identified by reference numerals 21 to 24, respectively. The core carrying part of the shown machine is movable in rotation and also vertically as illustrated by the arrows. The structure and operation of the injection molding machine will be readily understood by any person with ordinary skill in the art, so that no further description thereof will be made.

In the case of moldings for letters having an enclosed area, such a capital letter signs A, B, D and the like, it is necessary that a pin 6 as shown in Fig. 2 be provided at a location function of the one of the enclosed area, so as to make a passage allowing the soft plastic material for the second part molding to be injected into the enclosed area. As a result, for each outer die corresponding to a sign pattern having an enclosed area, a particular inner die corresponding to the outer die has to be provided.

Summary of the Invention

The object of the invention is to provide a method allowing the making of plastic moldings, such as the one shown in Figs 1A and 1B, by means of an injection molding machine and without needing a specific inner die for each molding corresponding to a sign pattern showing an enclosed area.

This object is attained by a method comprising the formation of a first part molding having an upper wall portion with a projection formed thereon and defining an enclosed area and with through holes opening in the enclosed area, and the formation of a second part molding made of a plastic material which has a color different from the one of the first part molding, and which adheres to the first part molding at least on both sides of the upper wall thereof and fills said enclosed area by passing through said holes, whereby the first part molding is buried in the plastic material of the second part molding except at least for the end face of said projection, said method comprising the steps of:

— providing a mold die constituted by a first outer die having an upper inner face which shows a pattern corresponding to said projection to be formed on the first part molding, and an inner die having projecting parts on its head facing the outer die, said projecting parts corresponding to the holes to be formed in the first part molding,

— forming the first part molding by injecting a first plastic material in a first cavity formed by the first outer die and the inner die with the end faces of the projecting parts abutting said upper face of the first outer die,

— removing the first outer die and raising the first part molding from the head of the inner die by means of at least one eject pin passing through the inner die,

— positioning a second outer die over the first part molding to form a second cavity by means of the inner die and the second outer die having a lower face abutting said projection formed on the first part molding and,

— forming the second part molding by injecting a second plastic material in the second cavity with the first part molding being maintained in said second cavity in spaced relationship with respect to the head of the inner die.

Preferably, the projections protruding from the head of the inner die are formed at various positions in a matrix fashion, with a predetermined pitch kept therebetween, thereby allowing the formation of the first part molding with through holes like meshes.

The invention will be more readily understood from the following detailed description made in connection with the accompanying drawings.

Brief Description of the Drawings

In the drawings:

Fig. 1A is a plan view of a prior art key top with an 0 sign, and Fig. 1B is a side view of the same key top, partially sectioned;

Figs. 2A, 2B and 2C illustrate successive steps of a prior art method for making the key top of Figs 1A and 1B;

Fig. 3 is an isometric view of an injection molding machine;

Figs. 4A, 4B and 4C illustrate successive steps of the method according to the invention applied to the manufacturing of a key top;

Fig. 5 is a plan view of an inner die used in carrying out the method according to the invention;

Figs. 6A and 6B are views similar to Fig. 4A and Fig. 4C showing in particular another embodiment of an inner die used in carrying out the method according to the invention;

Figs. 7A and 7B are views similar to Fig. 6B and Fig. 5 illustrating a further embodiment of the invention; and

Fig. 8A is a view similar to Fig. 5 showing a still further embodiment of an inner die used in carrying out the method according to the invention, and Fig. 8B is a cross-sectional view of the die of Fig. 8A.

Description of Preferred Embodiments

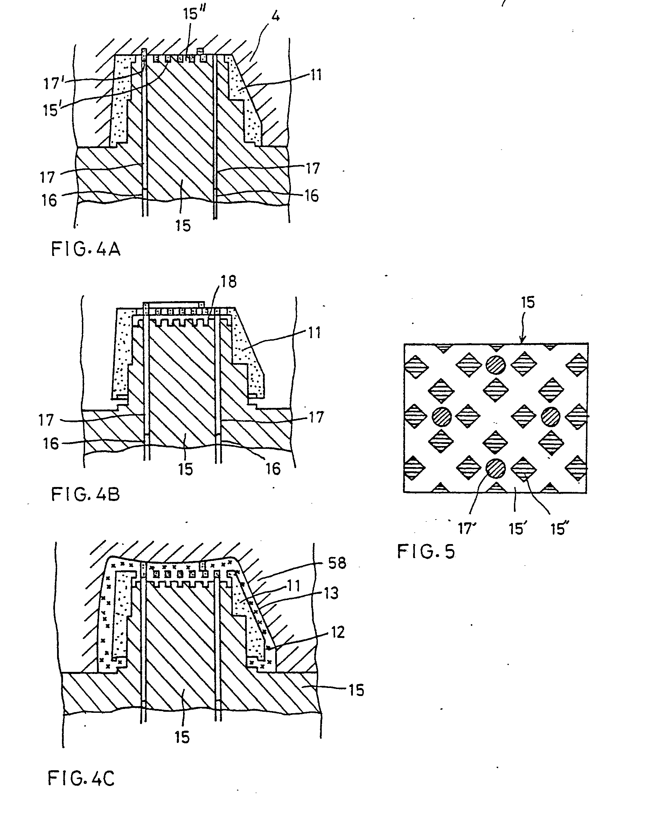

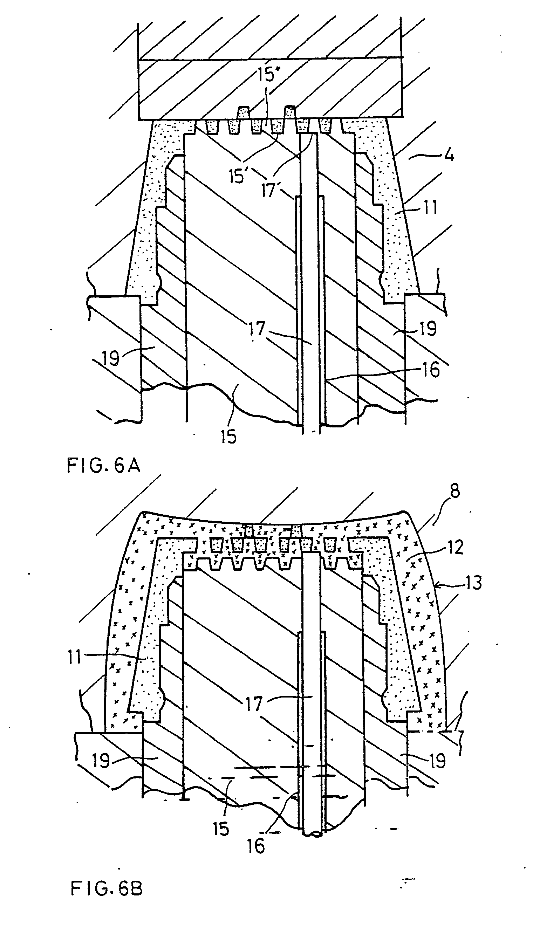

An embodiment of the method according to the invention will now be explained referring to Figs 4A, 4B, 4C and 5. Figs. 4A to 4C illustrate successive steps of this method for making a key top having a sign 0 and Fig. 5 is an enlarged plan view of an inner die used in carrying out the method. For the outer dies which are used for making the first and second part moldings, the same reference numerals will be used as for the outer dies shown in Figs 2A, 2C.

Referring to Fig. 4A, a first part molding 11 is made by positioning the outer die 4 corresponding to said first part molding and an inner die 15 at predetermined locations so as to face each other, and then soft plastic material of gray color is injected into the cavity formed by the dies 4 and 15. The head of the inner die 15 which faces the 0 pattern engraved in the outer die 4 is, as depicted in Fig. 5, formed with grooves like meshes, and with a plurality of projections 15″ which protrude from the base 15′ of the grooves. In addition, an eject pin 17 which is vertically movable under the action of a cam (not shown) fits each one of a plurality of through holes 16 which are formed vertically through the inner die 15. The upper end faces 17′ of the eject pin 17 is substantially at the level of the base 15′ when making of the first part molding. The eject pin 17 may be circular or rectangular in cross-section. During injection of the soft plastic material, a lower face of the outer die 4 abuts an upper face of the inner die 15, and an upper inner face or ceiling of a cavity structure of the outer die 4 abuts the upper faces of the projections 15″. Therefore, the upper wall of the first part molding 11 is formed with meshes, and a number of through holes are formed with the sign 0 protruding on said upper wall. In operation, the through holes 16 also serve as an escape passage for gases generated during the molding operation.

Next, as depicted in Fig. 4B, the outer die 4 for making the first part molding is removed while each eject pin 17 is raised over a predetermined height, thereby spacing the upper wall of the raised first part molding slightly away from the upper face of the head of the inner die 15 to provide a path 18 for soft plastic material therebetween.

Further, as illustrated in Fig. 4C, the outer die 8 for making the second part molding is so positioned that its lower face and its cavity forming face abut respectively the upper face of the inner die 15 and the upper face of the sign 0 of the first part molding 11. Soft plastic material of dark gray color is injected into the cavity thus formed to make the second part molding 12. The soft plastic material which is injected into the cavity through a port (not shown) provided in the outer die 8 flows into the enclosed area of the sign 0 through the path 18, and a key top 13 similar to the one of Fig. 1 is obtained.

Figs. 6A and 6B which correspond to Figs 4A and 4C illustrate other inner and outer dies to carry out the method of the invention. As it will be understood from these drawings, the projections 15″ are tapered and have a head smaller than the bottom part. Further, side cores 19 are provided which help the eject pin 17 in raising the first part molding 11.

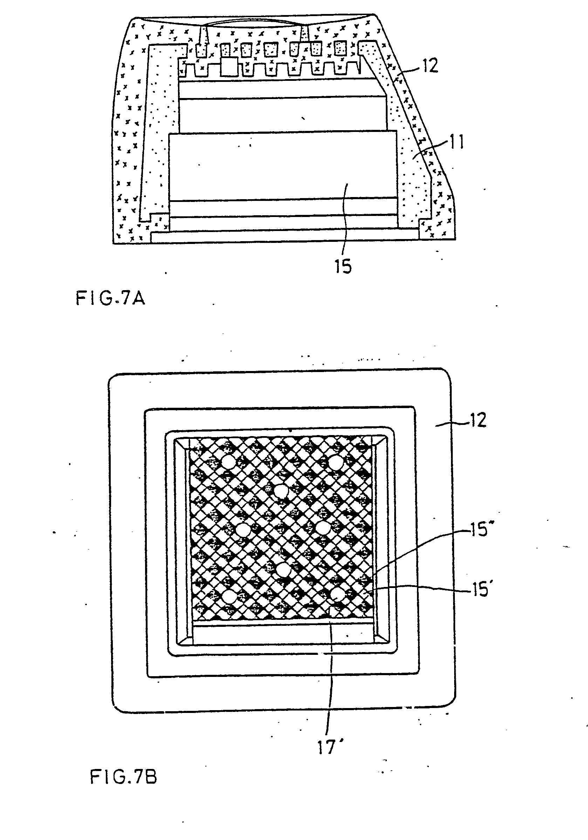

A further embodiment of the molding obtained by means of the invention is shown in Figs 7A and 7B which correspond to Fig. 6B and Fig. 5, respectively.

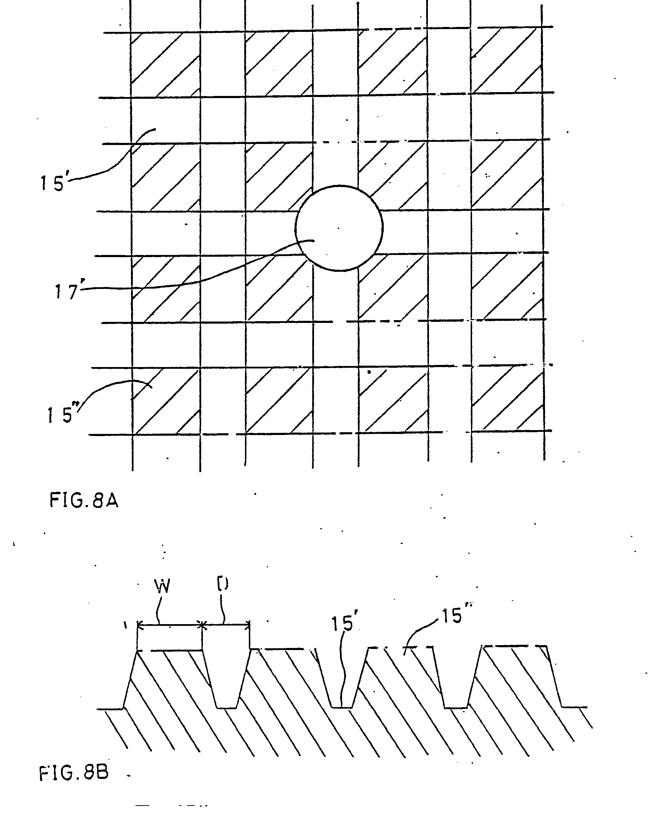

Fig. 8A which corresponds to Fig. 5 shows a head of another inner die, and Fig. 8B a sectioned side view of the head of Fig. 8A. In this embodiment, the height of each projection 15″ is equal to 0.6 mm, the width w of its head is 0.45 mm and the distance D between the heads is 0.55 mm.

The same inner die 15 is used for making other key tops similar to the key top 13, with a letter having an enclosed area, for example capital letters B, P and so forth, as well as other signs not having an enclosed area, such as C, P and the like, these signs being not limited to capital letters, unless they have an enclosed area which is so small as to be completely hidden by the head (Fig. 5) of the inner die 15.

As it will be understood from the foregoing description, the cost for preparing dies is substantially reduced by using the method of the invention, because the same inner die is used in the manufacture of two color moldings having a similar shape but different signs. It makes no difference whether the signs have enclosed areas or not. The merit of the invention is not limited to the above because also the means to replace inner dies which were required in carrying out the prior art method are dispensed with. This enables the making of solid and strong dies with an improved degree of precision of the products in addition to a higher manufacturing yield of two color moldings.

Although the invention has been described taking a key top as an example of the plastic molding to be manufactured, the invention is not limited thereto and is applicable to any other plastic moldings having patterns in two colors.

## Claims

1. A method for manufacturing a plastic molding, said method comprising the formation of a first part molding (11) having an upper wall portion with a projection formed thereon and defining an enclosed area and with through holes opening in the enclosed area, and the formation of a second part molding (12) made of a plastic material which has a color different from the one of the first part molding, and which adheres to the first part molding at least on both sides of the upper wall thereof and fills said enclosed area by passing through said holes, whereby the first part molding is buried in the plastic material of the second part molding except at least for the end face of said projection, said method comprising the steps of:

— providing a mold die constituted by a first outer die (4) having an upper inner face which shows a pattern corresponding to said projection to be formed on the first part molding, and an inner die (15) having projecting parts (15″) on its head facing the outer die, said projecting parts corresponding to the holes to be formed in the first part molding,

— forming the first part molding (11) by injecting a first plastic material in a first cavity formed by the first outer die (4) and the inner die (15) with the end faces of the projecting parts abutting said upper face of the first outer die (4),

— removing the first outer die (4) and raising the first part molding (11) from the head of the inner die (15) by means of at least one eject pin (17) passing through the inner die (15),

— positioning a second outer die (8) over the first part molding to form a second cavity by means of the inner die (15) and the second outer die (8) having a lower face abutting said projection formed on the first part molding (11) and,

— forming the second part molding (12) by injecting a second plastic material in the second cavity with the first part molding (11) being maintained in said second cavity in spaced relationship with respect to the head of the inner die (15).

2. A method as claimed in claim 1, wherein said projecting parts (15″) protrude from the head of the inner die (15) at various positions in a matrix fashion.

3. A method as claimed in any one of claims 1 and 2, wherein said at least one eject pin (17) is movable between a first position wherein its end face (17′) lies substantially at the level of the surface (15′) of the head of the inner die (15) from which said projecting parts (15″) protrude, and a second position wherein its end face (17′) lies above the end faces of said projecting parts (15″).

4. A method as claimed in any one of claims 1 to 3, wherein that said projecting parts (15″, Figs. 6A, 6B) have a tapered form.

5. A method as claimed in any one of claims 1 to 4 for the making of key tops usable to operate press button switches and each bearing a sign such as alphanumeric character having an enclosed area and defined by said projection formed on the first part molding, wherein the same inner die (15) is commonly used for the making of different key tops.

## Patentansprüche

1. Verfahren zur Herstellung eines Kunststoffspritzteils, welches Verfahren die Bildung einer ersten Teilform (11), die einen oberen Wandabschnitt mit einem darauf geformten Vorsprung hat und einen eingeschlossenen Bereich begrenzt, und mit Durchgangslochöffnungen in dem eingeschlossenen Bereich, und die Bildung einer zweiten Teilform (12) umfaßt, die aus einem Kunststoffmaterial hergestellt ist, welches eine von dem der ersten Teilform unterschiedliche Farbe hat und welches an wenigstens beiden Seiten der oberen Wand der ersten Teilform haftet und den eingeschlossenen Bereich füllt, indem es durch die genannten Löcher hindurchtritt, wodurch die erste Teilform in dem Kunststoffmaterial der zweiten Teilform begraben wird, mit Ausnahme von wenigstens der Stirnfläche des genannten Vorsprungs, welches genannte Verfahren die folgenden Schritte umfaßt:

— Bildung einer Spritzform, die aus einer äußeren Spritzform (4), die eine obere innere Fläche hat, welche ein Muster aufweist, das dem genannten Vorsprung entspricht, der auf der ersten Teilform zu bilden ist, und einer inneren Spritzform (15) besteht, die auf ihrer der äußeren Spritzform zugewandten Stirnfläche vorstehende Abschnitte (15″) hat, die den in der ersten Teilform zu bildenden Löchern entsprechen,

— Bildung einer ersten Teilform (11) durch Spritzen eines ersten Kunststoffmaterials in einen ersten Hohlraum, der durch die erste äußere Spritzform (4) und die innere Spritzform (15) gebildet ist, wobei die Stirnflächen der vorspringenden Teile an der genannten oberen Oberfläche der ersten äußeren Spritzform (4) anstoßen,

— Entfernen der ersten äußeren Spritzform (4) und Anheben der ersten Teilform (11) von der Stirnfläche der inneren Spritzform (15) mittels wenigstens einem Auswerfstift (17), der durch die innere Spritzform (15) hindurchtritt,

— Positionieren einer zweiten äußeren Spritzform (8) über der ersten Teilform, um einen zweiten Hohlraum mittels der inneren Spritzform (15) und der zweiten äußeren Spritzform (8) zu bilden, die eine untere Fläche hat, die an dem genannten Vorsprung anliegt, der auf der ersten Teilform (11) gebildet ist, und

— Bildung einer zweiten Teilform (12) durch Spritzen eines zweiten Kunststoffmaterials in den zweiten Hohlraum, wobei die erste Teilform (11) in dem genannten zweiten Hohlraum mit Abstandsverhältnis in Bezug auf den Kopf der inneren Spritzform (15) gehalten wird.

2. Verfahren nach Anspruch 1, bei welchem die genannten vorstehenden Teile (15″) von dem Kopf der inneren Spritzform (15) an verschiedenen Positionen matrixartig vorstehen.

3. Verfahren nach einem der Ansprüche 1 und 2, bei welchem wenigstens ein Auswerfstift (17) zwischen einer ersten Position, in welcher seine Stirnfläche (17′) im wesentlichen auf dem Pegel der Oberfläche (15′) des Kopfes der inneren Spritzform (15) liegt, von welchem die vorstehenden Teile (15″) vorstehen, und einer zweiten Position, in welcher seine Stirnfläche (17′) oberhalb der Stirnfläche der genannten vorstehenden Teile (15″) liegt, bewegbar ist.

4. Verfahren nach einem der Ansprüche 1 bis 3, bei welchem die genannten vorstehenden Teile (15″, Figuren 6A, 6B) eine abgeschrägte Form haben.

5. Verfahren nach einem der Ansprüche 1 bis 4 zur Herstellung von Tastenkappen, die zur Betätigung von Druckknopfschaltern verwendbar sind und jeweils ein Zeichen, z. B. ein alphanumerisches Zeichen, tragen, welches einen eingeschlossenen Bereich hat und durch den genannten Vorsprung definiert ist, der auf der ersten Teilform gebildet ist, bei welchem dieselbe innere Spritzform (15) gemeinsam für die Herstellung verschiedener Tastenkappen verwendet wird.

**Revendications**

1. Procédé pour fabriquer une pièce moulée en plastique, comprenant la formation d'un premier moulage partiel (11) possédant une portion constituant une paroi supérieure, sur laquelle est formée une saillie définissant une zone entourée et qui présente des trous traversants débouchant dans la zone entourée, ainsi que la formation d'un second moulage partiel (12), fait d'une matière plastique dont la couleur diffère de celle du premier moulage partiel, qui adhère à celui-ci sur au moins les deux côtés de la paroi supérieure du premier moulage partiel et remplit la zone entourée en passant à travers les trous, de manière que le premier moulage partiel soit noyé dans la matière plastique du second moulage partiel, exception faite de la face extrême de la saillie au moins, ce procédé comprenant les pas consistant à:

— fournir un moule constitué d'une première matrice extérieure (4), possédant en haut une face interne avec un motif correspondant à la saillie à former sur le premier moulage partiel, et d'une matrice intérieure (15), possédant des protubérances (15″) sur sa tête faisant face à la matrice extérieure, protubérances qui correspondent aux trous à former dans le premier moulage partiel,

— former le premier moulage partiel (11) par l'injection d'une première matière plastique dans une première cavité, définie par la première matrice extérieure (4) et la matrice intérieure (15), avec les faces extrêmes des protubérances appliquées contre la face interne de la première matrice extérieure (4),

— enlever la première matrice extérieure (4) et soulever le premier moulage partiel (11) de la tête de la matrice intérieure (15) au moyen d'au moins une tige d'éjection (17) traversant la matrice intérieure (15),

— placer une deuxième matrice extérieure (8) par-dessus le premier moulage partiel pour délimiter une seconde cavité entre la matrice intérieure (15) et la deuxième matrice extérieure (8), s'appliquant par une face inférieure contre la saillie formée sur le premier moulage partiel (11) et,

— former le second moulage partiel (12) par l'injection d'une deuxième matière plastique dans la seconde cavité, pendant que le premier moulage partiel (11) est maintenu espacé de la tête de la matrice intérieure (15) à l'intérieur de la seconde cavité.

2. Procédé selon la revendication 1, dans lequel les protubérances (15″) font saillie de la tête de la matrice intérieure (15) à différentes positions selon une disposition matricielle.

3. Procédé selon la revendication 1 ou 2, dans lequel la tige d'éjection (17) ou chaque tige d'éjection est déplaçable entre une première position où sa face extrême (17′) est située sensiblement au même niveau que la surface (15′) de la tête de la matrice intérieure (15) d'ou les protubérances (15″) font saillie, et une seconde position où sa face extrême (17′) est située au-dessus des faces extrémes des protubérances (15″).

4. Procédé selon l'une quelconque des revendications 1 à 3, dans lequel les protubérances (15″, figures 6A, 6B) possèdent une forme qui se rétrécit.

5. Procédé selon l'une quelconque des revendications 1 à 4 pour la fabrication de têtes de touches utilisables pour manoeuvrer des interrupteurs à bouton-poussoir et portant chacune un signe tel qu'un caractère alphanumérique possédant une zone entourée et définie par la saillie formée sur le premier moulage partiel, dans lequel la même matrice intérieure (15) est utilisée en tant que matrice commune pour la fabrication de différentes têtes de touches.

FIG. 1A

FIG. 2A

FIG. 1B

FIG. 2B

FIG. 2C

FIG. 4A

FIG. 4B

FIG. 4C

FIG. 5

FIG. 6A

FIG. 6B

FIG.7A

FIG.7B

FIG.8A

FIG.8B